# EUROPÄISCHE PATENTANMELDUNG

(11) **EP 4 197 638 A1**
(43) Veröffentlichungstag der Anmeldung: **21.06.2023**
(21) Anmeldenummer: 22020616.3
(22) Anmeldetag: 19.12.2022
(51) Int. Cl.: B02C 7/02, B02C 7/11, B02C 7/12, A47J 42/20, B02C 7/13, D21D 1/30

(54) **SCHEIBENMAHLVORRICHTUNG SOWIE MÜHLE DAMIT**

(30) Priorität: 20.12.2021 DE 202021003832 U
(71) Anmelder: FrymaKoruma AG, 4310 Rheinfelden (CH)
(72) Erfinder: Brogli, Hans, 4310 Rheinfelden (CH)
(74) Vertreter: Reichert & Lindner Partnerschaft Patentanwälte

(57) **Zusammenfassung**

Die Erfindung betrifft eine Scheibenmahlvorrichtung (2) mit einer Statorscheibe (3) und einer Rotorscheibe (4), die bezüglich einer gemeinsamen Scheibenachse koaxial angeordnet sowie von zumindest annähernd gleichem Durchmesser sind und deren einander zugewandten Seiten entsprechend eine ringförmige Statorzahnoberfläche und ringförmige Rotorzahnoberfläche enthalten, wobei die ringförmige Statorzahnoberfläche wenigstens einen Statorringbereich mit Statorzähnen, die in Umfangsrichtung durch Statornute beabstandet sind, und die ringförmige Rotorzahnoberfläche wenigstens einen Rotorringbereich mit Rotorzähnen enthält, die in Umfangsrichtung durch Rotornute beabstandet sind, wobei die Rotorzahnoberflächen und Statorzahnoberflächen einen ringförmigen Mahlspalt bestimmen und so angeordnet und geformt sind, dass der Mahlspalt radial in Richtung von der Scheibenachse zum Rand von Statorscheibe (3) und Rotorscheibe (4) hin enger wird, wobei die Rotorzähne und Rotornute einen gegenüber der Radialrichtung der Rotorscheibe (4) schrägen oder gekrümmten Verlauf haben und in Kombination damit die Statorzähne und Statornute einen in Radialrichtung der Statorscheibe (3) weisenden Verlauf haben, und/oder wobei wenigstens zwei Statorringbereiche mit Statorzähnen und/oder Rotorringbereiche mit Rotorzähnen in Radialrichtung von Statorscheibe (3) bzw. Rotorscheibe (49 benachbart liegen und unterschiedliche Gestaltungen der Statorzähne bzw. Rotorzähne und/oder Statornute bzw. Rotornute aufweisen, und/oder wobei die Statornute und/oder Rotornute in Richtung von der Scheibenachse zum Rand von Statorscheibe (3) bzw. Rotorscheibe (4) hin enger werden, d.h. anders ausgedrückt, dass die Verzahnungen radial von der Scheibenachse zum Rand von Statorscheibe (3) und Rotorscheibe (3) hin enger werden. Die Erfindung betrifft ferner eine Mühle (1) mit einer solchen Scheibenmahlvorrichtung (2).

## Beschreibung

Die Erfindung betrifft eine Scheibenmahlvorrichtung sowie eine Mühle damit. Daraus resultiert ferner ein Mahlverfahren mit einer solchen Scheibenmahlvorrichtung und Mühle.

Eine gattungsgemäße Scheibenmahlvorrichtung basiert auf dem Rotor/Stator-Prinzip und enthält eine Statorscheibe und eine Rotorscheibe, die bezüglich einer gemeinsamen Scheibenachse koaxial angeordnet sowie von zumindest annähernd gleichem Durchmesser sind und deren einander zugewandten Seiten entsprechend eine ringförmige Statorzahnoberfläche und ringförmige Rotorzahnoberfläche enthalten, also je eine Verzahnung aufweisen. Die ringförmige Statorzahnoberfläche enthält wenigstens einen Statorringbereich mit Statorzähnen, die in Umfangsrichtung durch Statornute beabstandet sind. Ähnlich enthält die ringförmige Rotorzahnoberfläche wenigstens einen Rotorringbereich mit Rotorzähnen, die in Umfangsrichtung durch Rotornute beabstandet sind.

Bei Drehung des Rotors liegen temporär die Rotorzähne zumindest teilweise den Statorzähnen gegenüber und definieren mit ihren Rotorzahnoberflächen und Statorzahnoberflächen einen ringförmigen Mahlspalt. Die Statorzahnoberflächen und die Rotorzahnoberflächen sind dabei so angeordnet und geformt, dass der Mahlspalt radial in Richtung von der Scheibenachse zum Rand von Statorscheibe und Rotorscheibe hin enger wird. Aus der Praxis von z.B. Scheibenmahlwerken von Kaffeemühlen ist bekannt, dass die Rotorzähne und Rotornute einen gegenüber der Radialrichtung der Rotorscheibe schrägen oder gekrümmten Verlauf haben.

Das Ziel der Erfindung ist es, die Funktion und Zuverlässigkeit einer solchen Scheibenmahlvorrichtung zu verbessern.

Dieses Ziel wird mit einer Scheibenmahlvorrichtung sowie einer Mühle damit gemäß den selbständigen/unabhängigen Ansprüche erreicht. Vorteilhafte und/oder bevorzugte weitere Ausgestaltungen sind in den abhängigen Ansprüchen angegeben. Im Rahmen der Erfindung liegt auch ein Mahlverfahren mit einer solchen Scheibenmahlvorrichtung und Mühle unter Ausnutzung der spezifischen Merkmale der erfindungsgemäßen Scheibenmahlvorrichtung bzw. Mühle.

Durch die Erfindung wird somit eine Scheibenmahlvorrichtung geschaffen, wobei insbesondere zusätzlich zu den oben dargestellten gattungsbildenden Merkmalen wenigstens eine der folgenden Ausgestaltungen vorgesehen ist.
- dass die Rotorzähne und Rotornute einen gegenüber der Radialrichtung der Rotorscheibe schrägen oder gekrümmten Verlauf haben und in Kombination damit die Statorzähne und Statornute einen in Radialrichtung der Statorscheibe weisenden Verlauf haben,
und/oder
- dass wenigstens zwei Statorringbereiche mit Statorzähnen und/oder Rotorringbereiche mit Rotorzähnen in Radialrichtung von Statorscheibe bzw. Rotorscheibe benachbart liegen und unterschiedliche Gestaltungen der Statorzähne bzw. Rotorzähne und/oder Statornute bzw. Rotornute aufweisen, wobei
   vorzugsweise solche benachbarte Statorringbereiche und/oder Rotorringbereiche durch eine Mischzonen-Umfangsnut getrennt sind, und/oder
   - bevorzugt in solchen benachbarten Statorringbereichen und/oder Rotorringbereichen in einem in Richtung von der Scheibenachse zum Rand von Statorscheibe und Rotorscheibe hin radial weiter außen liegenden Statorringbereich bzw Rotorringbereich die Statornute bzw. Rotornute enger sind als in dem dazu radial weiter innen benachbart liegenden Statorringbereich und/oder Rotorringbereich, d.h. anders ausgedrückt, dass die Verzahnungen von benachbarten Statorringbereichen und/oder Rotorringbereichen radial von der Scheibenachse zum Rand von Statorscheibe und Rotorscheibe hin enger werden, oder andersausgedrückt, dass die Mahlung von der Scheibenachse zum Rand von Statorscheibe und Rotorscheibe hin von grober zu feiner wird,
und/oder
- dass die Statornute und/oder Rotornute in Richtung von der Scheibenachse zum Rand von Statorscheibe bzw. Rotorscheibe hin enger werden, d.h. anders ausgedrückt, dass die Verzahnungen radial von der Scheibenachse zum Rand von Statorscheibe und Rotorscheibe hin enger werden, oder andersausgedrückt, dass die Mahlung von der Scheibenachse zum Rand von Statorscheibe und Rotorscheibe hin von grober zu feiner wird.

Eine erfindungsgemäße Mühle enthält eine solche Scheibenmahlvorrichtung.

Bei der Scheibenmahlvorrichtung handelt es sich um ein Rotor/Stator-Prinzip. Statorscheibe und Rotorscheibe, oder kurz Rotor und Stator sind auf ihren einander zugewandten Flächen, die auch als Planflächen bezeichnet werden können, d.h. entsprechend an der Statorzahnoberfläche und an der Rotorzahnoberfläche verzahnt.

Der Rotor wird insbesondere über einen Rotorhalteflansch auf einer koaxial zur Scheibenachse verlaufenden Mühlenwelle befestigt und dreht sich beispielsweise und bevorzugt im Uhrzeigersinn mit einer Geschwindigkeit von z.B. als Standard oder insbesondere einstellbar oder regelbar von ca. 1000 bis ungefähr 4000 U/min, vorzugsweise zumindest annähernd 3000 U/min. Zum Regeln der Drehzahl des Rotors kann insbesondere ein Frequenzumformer enthalten sein.

Vorzugsweise ist der Stator an einem Mühlenoberteil verschraubt und ist vorteilhafterweise axial längs der Scheibenachse verstellbar, wodurch bzw. worüber vorzugsweise auch die Größe eines Mahlspaltes in Axialrichtung zwischen Statorscheibe und Rotorscheibe bzw. deren einander zugehwandten Statorzahnoberfläche und Rotorzahnoberfläche einstellbar oder regelbar ist.

Die Statorzahnoberfläche und Rotorzahnoberfläche von Stator bzw. Rotor sind je mit einer speziellen Verzahnung versehen. Der Mahlspalt zwischen Rotor und Stator kann auch als Planspalt bezeichnet werden und ist vorzugsweise und mit Vorteil insbesondere an der engsten Stelle von etwa 0,3 bis ca. 3 mm und ist insbesondere einstellbar oder regelbar. Mit einer Einstellbarkeit kann die Mühle und ihre Scheibenmahlvorrichtung sowohl auf bestimmte zu mahlende Produkte als auch auf eine gewünschte Endfeinheit angepasst werden. Das Mahlgut wird über den Stator vom Zentrum her der Verzahnung zugeführt. Durch die Zentrifugalwirkung im Betrieb, d.h. die Drehung der Statorscheibe wird das Produkt neben der Mahlung auch durch die Verzahnung gefördert und verlässt die durch den Mahlspalt bestimmte Mahlzone am Außendurchmesser von Statorscheibe und Rotorscheibe.

Die Statorzahnoberflächen und die Rotorzahnoberflächen sind bevorzugt so angeordnet und/oder geformt, dass der Mahlspalt radial in Richtung von der Scheibenachse zum Rand von Statorscheibe und Rotorscheibe hin enger wird. Dabei oder alternativ kann vorgesehen sein, dass die Statorzahnoberfläche und die Rotorzahnoberfläche so angeordnet und/oder geformt sind, dass der Mahlspalt in einem Randbereich von Statorscheibe und Rotorscheibe weiter wird, um die letztendliche Ausgabe des fertig gemahlenen Produkts gefördert und eine Verstopfung dort vermieden wird, wobei für die Ausgabe wegen der im Randbereich von Statorscheibe und Rotorscheibe aber auch die dort herrschende größte absolute Geschwindigkeit der Rotorscheibe förderlich ist.

Weiter kann mit Vorzug vorgesehen sein, dass zumindest die Rotorzähne und/oder Rotornute einen gegenüber der Radialrichtung der Rotorscheibe schrägen oder gekrümmten Verlauf haben, wie beispielsweise bei Drehung der Rotorscheibe in Uhrzeigerrichtung insbesondere gegen diese Uhrzeigerrichtung geneigt, verlaufend oder weisend. Die Statorzähne und/oder Statornute können ebenfalls einen gegenüber der Radialrichtung der Rotorscheibe schrägen oder gekrümmten Verlauf haben, können aber auch zumindest im Wesentlichen radial verlaufen. Die Verzahnung kann somit von innen nach außen sowohl gerade wie auch schräg zur Scheibenachse verlaufen. Die Förderwirkung kann dadurch verstärkt oder gebremst werden. s kann insbesondere auch vorgesehen sein, dass die Schrägstellung oder Krümmung der Rotorzähne und/oder Rotornute sowie alternativ oder zusätzlich die Statorzähne und/oder Statornute in einzelnen Rotor- bzw. Statorringbereichen entgegengesetzt schräg oder gekrümmt verlaufend ausgebildet sind.

Die Verzahnung ist über die gesamte Mahlzone in verschiedene Zahnkreise, d.h. Statorringbereiche und/oder Rotorringbereiche eingeteilt. Eine grobe Verzahnung im an den Innendurchmesser anschließenden Bereich, d.h. am innersten Statorringbereich und/oder Rotorringbereich kann als eine Vormahlzohne bezeichnet werden. Die Verzahnung wird mit jedem Zahnkreis, d.h. jedem Statorringbereich und/oder Rotorringbereich vorteilhafterweise und mit Vorzug von innen nach außen feiner.

Die Nuttiefe der Statornute und/oder Rotornute zwischen den Zähnen, d.h. entsprechend den Statorzähnen bzw. Rotorzähnen verläuft vorzugsweise und mit Vorteil konisch. Zum Außendurchmesser von Statorscheibe und Rotorscheibe hin werden die Statornute und/oder Rotornute bevorzugt und vorteilhafterweise enger, wodurch die Produktteile auf ihren Weg durch den Mahlspalt radial auswärts von Statorscheibe und Rotorscheibe, was durch die Drehung der Rotorscheibe automatisch bewirkt wird, kontinuierlich feiner gemahlen werden.

Besonders bevorzugt ist es, wenn die Nutbreite zumindest annähernd 1,5 bis 3,5 mal, insbesondere wenigstens ungefähr 2,5 mal größer als die Nuttiefe von Statorzahnoberfläche und/oder Rotorzahnoberfläche ist, womit in vorteilhafter Weise ein Verklemmen der Produktpartikel in den Zahnnuten, d.h. Statornuten und/oder Rotornuten zwischen den Statorzähnen bzw. Rotorzähnen minimiert, verhindert oder ausgeschlossen werden kann.

Jeder Zahnkreis, d.h. Statorringbereich und/oder Rotorringbereich wird mit Vorzug und Vorteil mit einer Ringnut, die eine Mischzonen-Umfangsnut darstellt und auch als Mischzone bezeichnet werden kann, unterteilt. In dieser Mischzone werden die Produktpartikel vermischt bevor sie in den nächst feineren Zahnkreis, d.h. Statorringbereich und/oder Rotorringbereich gefördert werden.

Ein Mahlgut wird der Mühle z.B. über einen offenen Trichter oder mit einer Pumpe zugeführt. Der Produktauslauf kann frei über einen offenen Auslauf sowie in einer geschlossenen Leitung mit etwas Gegendruck erfolgen.

Ein erfindungsgemäße Scheibenmahlvorrichtung und Mühle damit kann beispielsweise in der Nassmahltechnik eingesetzt werden. Typische und bevorzugte Anwendungen sind z.B. das Vermahlen von verschiedenen Bohnen, Getreide und Nussarten unter Zugabe von einer Flüssigkeit. Ölhaltige Bohnen, Getreide und Nüsse können geröstet auch ohne Zugabe von Flüssigkeit vermahlen werden. Mit einer erfindungsgemäßen Scheibenmahlvorrichtung können aber auch diverse andere Produkte fein gemahlen werden.

Offenbart ist in den vorliegenden Unterlagen ferner ein auf der erfindungsgemäßen Scheibenmahlvorrichtung und Mühle basierendes und entsprechend vorteilhaftes Mahlverfahren sowie die Verwendung einer solchen erfindungsgemäßen Scheibenmahlvorrichtung und Mühle für spezielle Produktarten, Produkte und Ergebnisse.

Die Erfindung wird anhand von Ausführungsbeispielen nachfolgend unter Bezugnahme auf die Zeichnung lediglich exemplarisch näher erläutert, in der dargestellt ist in
- Fig. 1: eine schematische teilweise aufgeschnittene Seitenansicht eines Ausführungsbeispiels einer Mühle mit einer Scheibenmahlvorrichtung,
- Fig. 2: eine vergrößerte Ansicht des aufgeschnittenen Ausschnittes "ZM" des Ausführungsbeispiels der Mühle mit der Scheibenmahlvorrichtung aus der Fig. 1,
- Fig. 3: eine schematische Draufsicht auf eine Statorscheibe des Ausführungsbeispiels der Scheibenmahlvorrichtung aus der Fig. 1,
- Fig. 4: den Schnitt AS-AS der Statorscheibe aus der Fig. 3,
- Fig. 5: den Schnitt BS-BS der Statorscheibe aus der Fig. 3,
- Fig. 6: eine vergrößerte Ansicht des Ausschnittes "XS" der Statorscheibe aus der Fig. 3,
- Fig. 7: eine vergrößerte Ansicht des Ausschnittes "YS" der Statorscheibe aus der Fig. 3,
- Fig. 8: eine vergrößerte Ansicht des Ausschnittes "ZS" der Statorscheibe aus der Fig. 3,
- Fig. 9: eine schematische Draufsicht auf eine Rotorscheibe des Ausführungsbeispiels der Scheibenmahlvorrichtung aus der Fig. 1,
- Fig. 10: den Schnitt AR-AR der Rotorscheibe aus der Fig. 9,
- Fig. 11: den Schnitt BR-BR der Rotorscheibe aus der Fig. 9,
- Fig. 12: eine vergrößerte Ansicht des Ausschnittes "XR" der Rotorscheibe aus der Fig. 9,
- Fig. 13: eine vergrößerte Ansicht des Ausschnittes "YR" der Rotorscheibe aus der Fig. 9, und
- Fig. 14: eine vergrößerte Ansicht des Ausschnittes "ZR" der Rotorscheibe aus der Fig. 9.

Anhand der nachfolgend beschriebenen und in den einzelnen Figuren der Zeichnung dargestellten Ausführungs- und Anwendungsbeispiele wird die Erfindung lediglich exemplarisch näher erläutert, d.h. sie ist nicht auf diese Ausführungs- und Anwendungsbeispiele oder auf die Merkmalskombinationen innerhalb eines Ausführungs- und Anwendungsbeispiels beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angegeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten kombiniert werden, auch wenn sie in den vorliegenden Unterlagen nicht gesondert behandelt sind.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

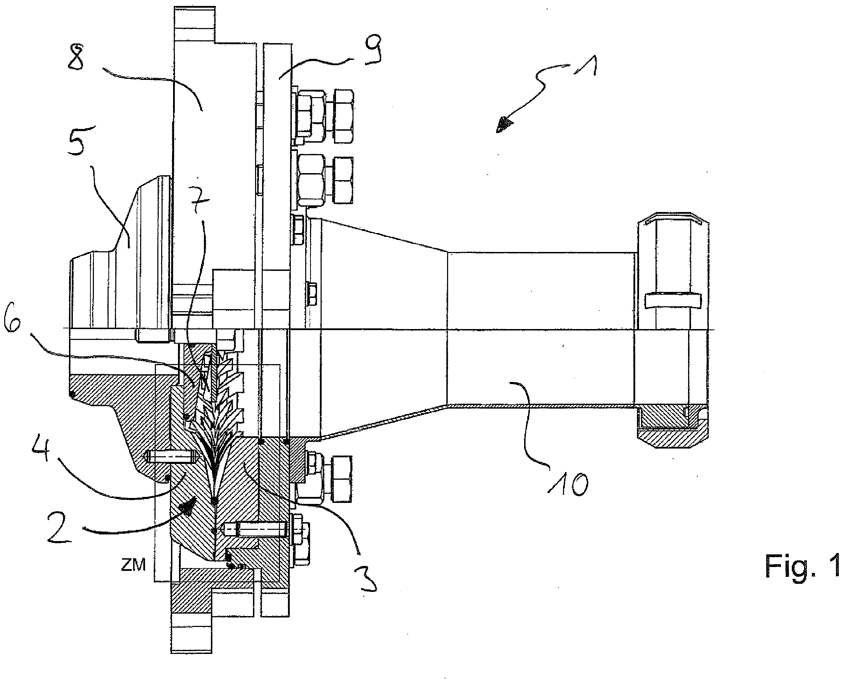

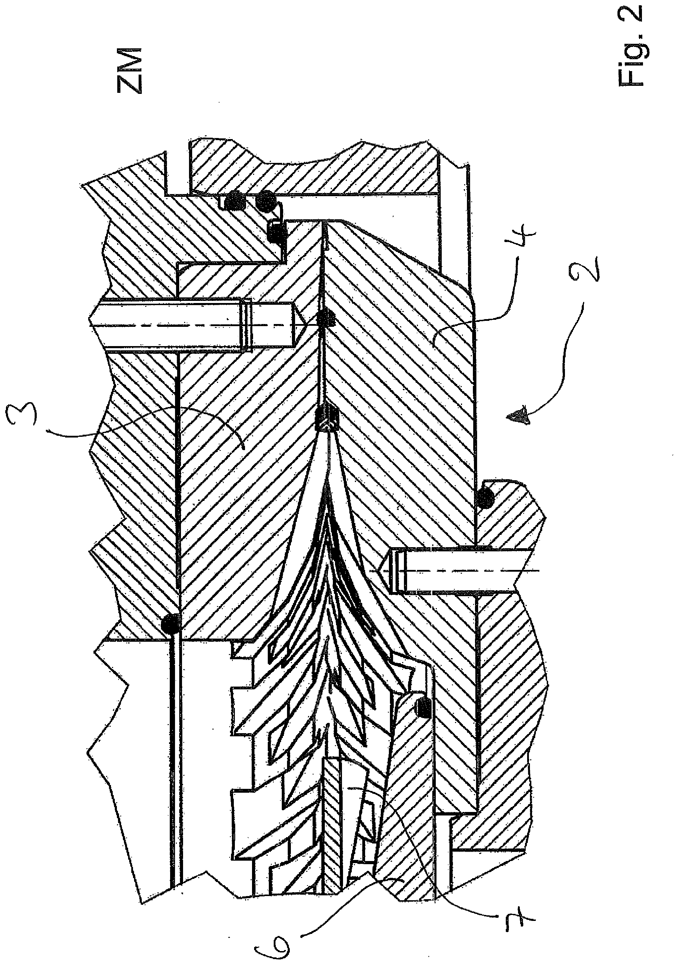

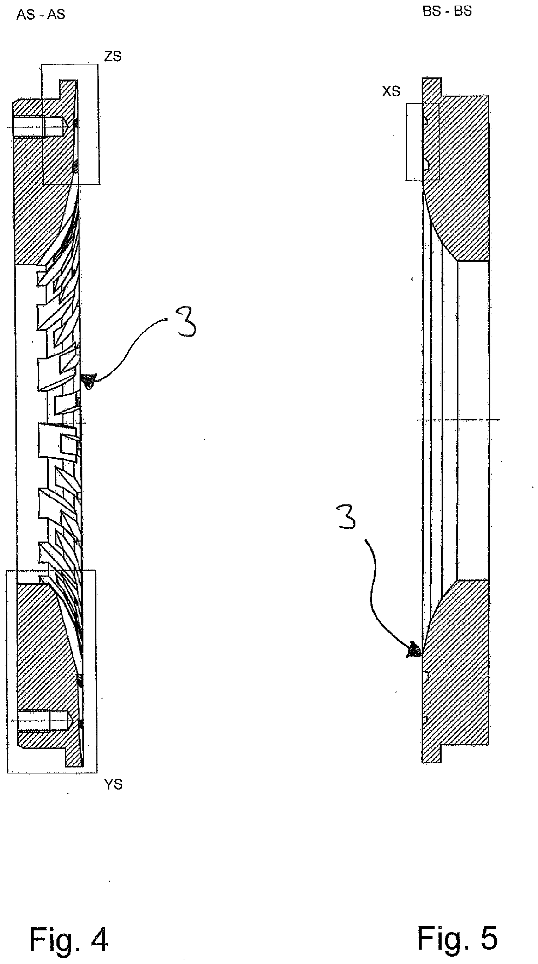

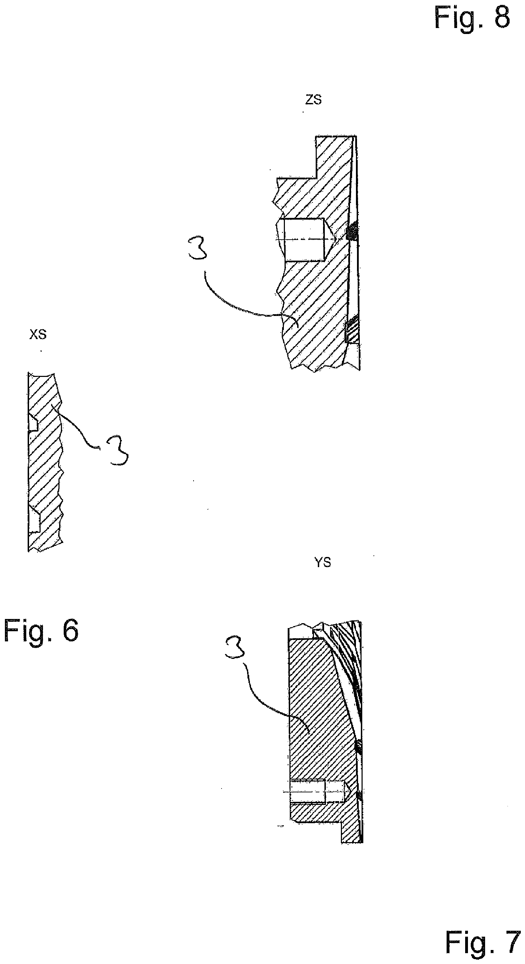

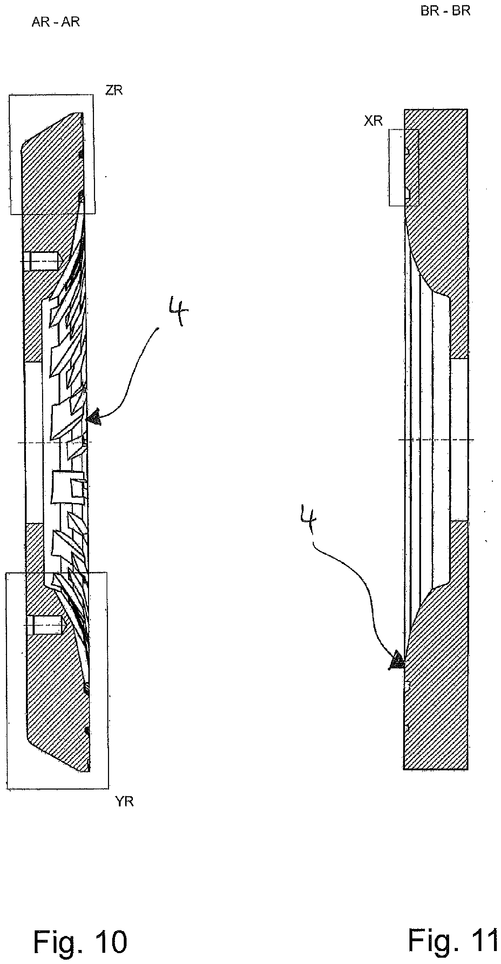

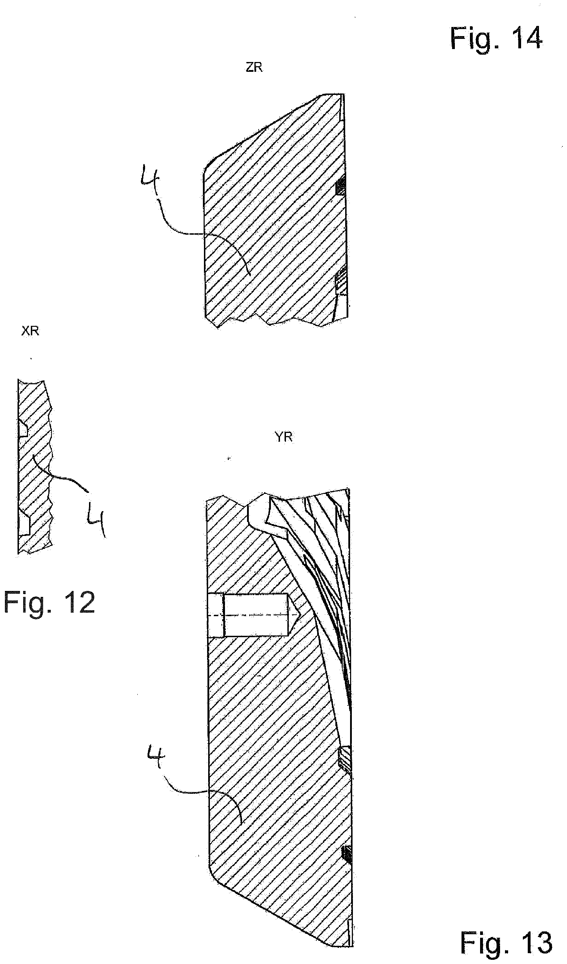

In der Fig. 1 ist ein Ausführungsbeispiel einer Mühle 1 mit einer Scheibenmahlvorrichtung 2 schematische in einer teilweise aufgeschnittenen Seitenansicht gezeigt. In dieser Fig. 1 sowie in den übrigen Figuren 2 bis 14 bezeichnen die folgenden Bezugszeichen die entsprechenden Teile, Komponenten oder Merkmale: Mühle 1, Scheibenmahlvorrichtung 2, Statorscheibe 3, Rotorscheibe 4, Steinteller 5, Spannscheibe 6, Zufuhrflügel 7, Nockenring 8, Deckel 9, Produkt-Einlauf/Einlass 10.

Hinsichtlich den Gestaltungen und Anordnungen sowie Funktionen wird zur Vermeidung bloßer Wiederholungen auf die Angaben und Erläuterungen in der obigen Einleitung verwiesen, die durch Bezugnahme vollumfänglich auch Bestandteil der Beschreibung der Figuren und Ausführungsbeispiele ist.

Bei der Scheibenmahlvorrichtung 2 ist, wie auch den Figuren der Zeichnung zu entnehmen ist, zusätzlich zu den eingangs dargestellten gattungsbildenden Merkmalen vorgesehen,
- dass die Rotorzähne und Rotornute einen gegenüber der Radialrichtung der Rotorscheibe 4 schrägen oder gekrümmten Verlauf haben und in Kombination damit die Statorzähne und Statornute einen in Radialrichtung der Statorscheibe 3 weisenden Verlauf haben,

Alternativ oder zusätzlich ist bei der Scheibenmahlvorrichtung 2 vorgesehen,
- dass wenigstens zwei Statorringbereiche mit Statorzähnen und/oder Rotorringbereiche mit Rotorzähnen in Radialrichtung von Statorscheibe 3 bzw. Rotorscheibe 4 benachbart liegen und unterschiedliche Gestaltungen der Statorzähne bzw. Rotorzähne und/oder Statornute bzw. Rotornute aufweisen.

Bei dieser Ausgestaltung ist ferner vorteilhafterweise vorgesehen, dass solche benachbarte Statorringbereiche und/oder Rotorringbereiche durch eine Mischzonen-Umfangsnut getrennt sind. Alternativ oder zusätzlich dazu ist mit Vorteil vorgesehen, dass bevorzugt in solchen benachbarten Statorringbereichen und/oder Rotorringbereichen in einem in Richtung von der Scheibenachse zum Rand von Statorscheibe 3 und Rotorscheibe 4 hin radial weiter außen liegenden Statorringbereich bzw Rotorringbereich die Statornute bzw. Rotornute enger sind als in dem dazu radial weiter innen benachbart liegenden Statorringbereich und/oder Rotorringbereich, d.h. anders ausgedrückt, dass die Verzahnungen von benachbarten Statorringbereichen und/oder Rotorringbereichen radial von der Scheibenachse zum Rand von Statorscheibe 3 und Rotorscheibe 4 hin enger werden, oder anders ausgedrückt, dass die Mahlung von der Scheibenachse zum Rand von Statorscheibe 3 und Rotorscheibe 4 hin von grober zu feiner wird,

Noch weiter ist alternativ oder zusätzlich bei der Scheibenmahlvorrichtung 2 vorgesehen,
- dass die Statornute und/oder Rotornute in Richtung von der Scheibenachse zum Rand von Statorscheibe 3 bzw. Rotorscheibe 4 hin enger werden, d.h. anders ausgedrückt, dass die Verzahnungen radial von der Scheibenachse zum Rand von Statorscheibe 3 und Rotorscheibe 4 hin enger werden, oder andersausgedrückt, dass die Mahlung von der Scheibenachse zum Rand von Statorscheibe und Rotorscheibe hin von grober zu feiner wird.

Eine erfindungsgemäße Mühle 1 enthält eine solche Scheibenmahlvorrichtung 2.

Bei der Scheibenmahlvorrichtung 2 gemäß den Figuren der Zeichnung handelt es sich um ein Rotor/Stator-Prinzip. Statorscheibe 3 und Rotorscheibe 4, oder kurz Rotor und Stator sind auf ihren einander zugewandten Flächen, die auch als Planflächen bezeichnet werden können, d.h. entsprechend an der Statorzahnoberfläche und an der Rotorzahnoberfläche verzahnt.

Der Rotor 4 wird insbesondere über einen Rotorhalteflansch auf einer koaxial zur Scheibenachse verlaufenden Mühlenwelle befestigt und dreht sich beispielsweise und bevorzugt im Uhrzeigersinn mit einer Geschwindigkeit von z.B. als Standard oder insbesondere einstellbar oder regelbar von ca. 1000 bis ungefähr 4000 U/min, vorzugsweise zumindest annähernd 3000 U/min. Zum Regeln der Drehzahl des Rotors kann insbesondere ein Frequenzumformer enthalten sein.

Der Stator 3 ist an einem Mühlenoberteil verschraubt und vorteilhafterweise axial längs der Scheibenachse verstellbar, wodurch bzw. worüber vorzugsweise auch die Größe eines Mahlspaltes in Axialrichtung zwischen Statorscheibe und Rotorscheibe bzw. deren einander zugehwandten Statorzahnoberfläche und Rotorzahnoberfläche einstellbar oder regelbar ist.

Die Statorzahnoberfläche und Rotorzahnoberfläche von Stator 3 bzw. Rotor 4 sind je mit einer speziellen Verzahnung versehen. Der Mahlspalt zwischen Rotor 4 und Stator 3 kann auch als Planspalt bezeichnet werden und ist vorzugsweise und mit Vorteil insbesondere an der engsten Stelle von etwa 0,3 bis ca. 3 mm und ist insbesondere einstellbar oder regelbar. Mit einer Einstellbarkeit kann die Mühle 1 und ihre Scheibenmahlvorrichtung 2 sowohl auf bestimmte zu mahlende Produkte als auch auf eine gewünschte Endfeinheit angepasst werden. Das Mahlgut wird über den Stator 3 vom Zentrum her der Verzahnung zugeführt. Durch die Zentrifugalwirkung im Betrieb, d.h. die Drehung der Statorscheibe 3 wird das Produkt neben der Mahlung auch durch die Verzahnung gefördert und verlässt die durch den Mahlspalt bestimmte Mahlzone am Außendurchmesser von Statorscheibe 3 und Rotorscheibe 4.

Die Statorzahnoberflächen und die Rotorzahnoberflächen sind bevorzugt so angeordnet und/oder geformt, dass der Mahlspalt radial in Richtung von der Scheibenachse zum Rand von Statorscheibe 3 und Rotorscheibe 4 hin enger wird. Dabei oder alternativ kann vorgesehen sein, dass die Statorzahnoberfläche und die Rotorzahnoberfläche so angeordnet und/oder geformt sind, dass der Mahlspalt in einem Randbereich von Statorscheibe 3 und Rotorscheibe 4 weiter wird, um die letztendliche Ausgabe des fertig gemahlenen Produkts gefördert und eine Verstopfung dort vermieden wird, wobei für die Ausgabe wegen der im Randbereich von Statorscheibe 3 und Rotorscheibe 4 aber auch die dort herrschende größte absolute Geschwindigkeit der Rotorscheibe 4 förderlich ist.

Weiter kann bei einzelnen Ausführungsbeispielen mit Vorzug vorgesehen sein, dass zumindest die Rotorzähne und/oder Rotornute einen gegenüber der Radialrichtung der Rotorscheibe 4 schrägen oder gekrümmten Verlauf haben, wie beispielsweise bei Drehung der Rotorscheibe 4 in Uhrzeigerrichtung insbesondere gegen diese Uhrzeigerrichtung geneigt, verlaufend oder weisend. Die Statorzähne und/oder Statornute können ebenfalls einen gegenüber der Radialrichtung der Rotorscheibe 4 schrägen oder gekrümmten Verlauf haben, können aber auch zumindest im Wesentlichen radial verlaufen. Die Verzahnung kann somit von innen nach außen sowohl gerade wie auch schräg zur Scheibenachse verlaufen. Die Förderwirkung kann dadurch verstärkt oder gebremst werden. s kann insbesondere auch vorgesehen sein, dass die Schrägstellung oder Krümmung der Rotorzähne und/oder Rotornute sowie alternativ oder zusätzlich die Statorzähne und/oder Statornute in einzelnen Rotor- bzw. Statorringbereichen entgegengesetzt schräg oder gekrümmt verlaufend ausgebildet sind.

Die Verzahnung ist bei einzelnen Ausführungsbeispielen über die gesamte Mahlzone in verschiedene Zahnkreise, d.h. Statorringbereiche und/oder Rotorringbereiche eingeteilt. Eine grobe Verzahnung im an den Innendurchmesser anschließenden Bereich, d.h. am innersten Statorringbereich und/oder Rotorringbereich kann als eine Vormahlzohne bezeichnet werden. Die Verzahnung wird mit jedem Zahnkreis, d.h. jedem Statorringbereich und/oder Rotorringbereich vorteilhafterweise und mit Vorzug von innen nach außen feiner.

Die Nuttiefe der Statornute und/oder Rotornute zwischen den Zähnen, d.h. entsprechend den Statorzähnen bzw. Rotorzähnen verläuft bei einzelnen Ausführungsbeispielen vorzugsweise und mit Vorteil konisch. Zum Außendurchmesser von Statorscheibe 3 und Rotorscheibe 4 hin werden die Statornute und/oder Rotornute bevorzugt und vorteilhafterweise enger, wodurch die Produktteile auf ihren Weg durch den Mahlspalt radial auswärts von Statorscheibe 3 und Rotorscheibe 4, was durch die Drehung der Rotorscheibe 4 automatisch bewirkt wird, kontinuierlich feiner gemahlen werden.

Besonders bevorzugt ist es gemäß einzelnen Ausführungsbeispielen, wenn die Nutbreite zumindest annähernd 1,5 bis 3,5 mal, insbesondere wenigstens ungefähr 2,5 mal größer als die Nuttiefe von Statorzahnoberfläche und/oder Rotorzahnoberfläche ist, womit in vorteilhafter Weise ein Verklemmen der Produktpartikel in den Zahnnuten, d.h. Statornuten und/oder Rotornuten zwischen den Statorzähnen bzw. Rotorzähnen minimiert, verhindert oder ausgeschlossen werden kann.

Jeder Zahnkreis, d.h. Statorringbereich und/oder Rotorringbereich wird bei einzelnen Ausführungsbeispielen mit Vorzug und Vorteil mit einer Ringnut, die eine Mischzonen-Umfangsnut darstellt und auch als Mischzone bezeichnet werden kann, unterteilt. In dieser Mischzone werden die Produktpartikel vermischt bevor sie in den nächst feineren Zahnkreis, d.h. Statorringbereich und/oder Rotorringbereich gefördert werden.

Ein Mahlgut wird der Mühle 1 z.B. über einen offenen Trichter oder mit einer Pumpe zu dem Produkt-Einlauf/Einlass 10 zugeführt. Der Produktauslauf kann frei über einen offenen Auslauf sowie in einer geschlossenen Leitung mit etwas Gegendruck erfolgen.

Ein erfindungsgemäße Scheibenmahlvorrichtung 2 und Mühle 1 damit kann beispielsweise in der Nassmahltechnik eingesetzt werden. Typische und bevorzugte Anwendungen sind z.B. das Vermahlen von verschiedenen Bohnen, Getreide und Nussarten unter Zugabe von einer Flüssigkeit. Ölhaltige Bohnen, Getreide und Nüsse können geröstet auch ohne Zugabe von Flüssigkeit vermahlen werden. Mit einer erfindungsgemäßen Scheibenmahlvorrichtung können aber auch diverse andere Produkte fein gemahlen werden.

Offenbart ist in den vorliegenden Unterlagen ferner ein auf der erfindungsgemäßen Scheibenmahlvorrichtung 2 und Mühle 1 basierendes und entsprechend vorteilhaftes Mahlverfahren sowie die Verwendung einer solchen erfindungsgemäßen Scheibenmahlvorrichtung und Mühle für spezielle Produktarten, Produkte und Ergebnisse.

Das Material von Statorscheibe 3 und/oder Rotorscheibe 4 kann Remanit von ThyssenKrupp oder ein(en) anderer/-n austenitischer/-n Stahl sein oder enthalten, was besondere Vorteile hinsichtlich Verschleiß und Korrosionsbeständigkeit mit sich bringt.

Die Mühle 1 kann einen Vorzerkleinerer (nicht gezeigt) mit integriertem Zufuhr-Impeller (nicht gezeigt) sowie einen Sicherheitsschalter insbesondere zum Abschalten enthalten. Die Mühle 1 kann auf einen bestimmten maximalen Druck in der Produktkammer, wie beispielsweise 0,7 bar ausgelegt sein. Die Mühlenwelle kann in einer Wellendichtung z.B. aus Wolframkarbid/Kohlenstoff gehalten sein. Als Antrieb der Scheibenmahlvorrichtung 2 kann beispielsweise ein AC-Motor mit einer Thermistorsonde (PTC) und einer Kapazität von z.B. 5,5 kW und einer Drehzahl von 3000 U/min bei einer Netz-Frequenz von 50 Hz verwendet werden. Der Produktauslass für das fertig gemahlene Endprodukt ist vorteilhafterweise zugsweise an der untersten/niedrigsten Stelle des Gehäuses der Mühle 1, um einen optimalen Austrag zu gewährleisten. Vorzugsweise wird die Scheibenmahlvorrichtung 2 mit horizontal verlaufender Mühlenwelle an oder in der Mühle 1 installiert. Insbesondere kann eine bestehende Mühle mit einer erfindungsgemäßen Scheibenmahlvorrichtung 2 umgerüstet werden.

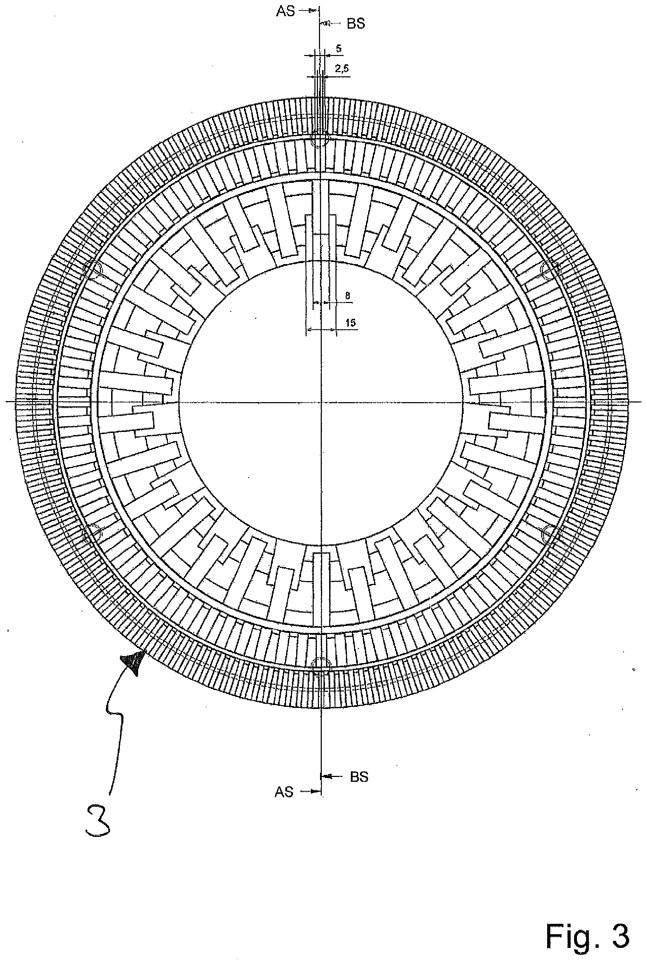

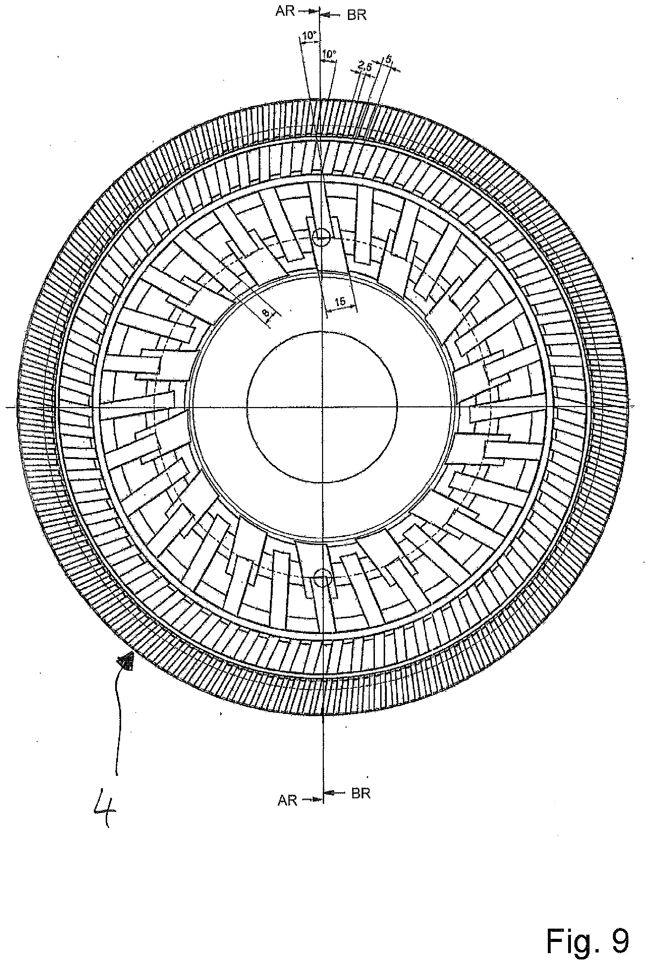

Die Maß- und Winkelangaben in den Figuren 3 und 9 sind lediglich exemplarisch und geben bevorzugte Tendenzen und im Bereich +/- 20 % vorzugsweise Größenordnungen an.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung und Zeichnung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Ausführungsbeispiele untereinander kombinierbar.

### Bezugszeichenliste

- 1: Mühle
- 2: Scheibenmahlvorrichtung
- 3: Statorscheibe
- 4: Rotorscheibe
- 5: Steinteller
- 6: Spannscheibe
- 7: Zufuhrflügel
- 8: Nockenring
- 9: Deckel
- 10: Produkt-Einlauf/Einlass

## Patentansprüche

1. Scheibenmahlvorrichtung (2) mit einer Statorscheibe (3) und einer Rotorscheibe (4), die bezüglich einer gemeinsamen Scheibenachse koaxial angeordnet sowie von zumindest annähernd gleichem Durchmesser sind und deren einander zugewandten Seiten entsprechend eine ringförmige Statorzahnoberfläche und ringförmige Rotorzahnoberfläche enthalten, wobei die ringförmige Statorzahnoberfläche wenigstens einen Statorringbereich mit Statorzähnen, die in Umfangsrichtung durch Statornute beabstandet sind, und die ringförmige Rotorzahnoberfläche wenigstens einen Rotorringbereich mit Rotorzähnen enthält, die in Umfangsrichtung durch Rotornute beabstandet sind, wobei die Rotorzahnoberflächen und Statorzahnoberflächen einen ringförmigen Mahlspalt bestimmen und so angeordnet und geformt sind, dass der Mahlspalt radial in Richtung von der Scheibenachse zum Rand von Statorscheibe (3) und Rotorscheibe (4) hin enger wird, wobei insbesondere zusätzlich wenigstens eine der folgenden Ausgestaltungen vorgesehen ist.
- dass die Rotorzähne und Rotornute einen gegenüber der Radialrichtung der Rotorscheibe (4) schrägen oder gekrümmten Verlauf haben und in Kombination damit die Statorzähne und Statornute einen in Radialrichtung der Statorscheibe (3) weisenden Verlauf haben,
und/oder
- dass wenigstens zwei Statorringbereiche mit Statorzähnen und/oder Rotorringbereiche mit Rotorzähnen in Radialrichtung von Statorscheibe (3) bzw. Rotorscheibe (49 benachbart liegen und unterschiedliche Gestaltungen der Statorzähne bzw. Rotorzähne und/oder Statornute bzw. Rotornute aufweisen, wobei
- vorzugsweise solche benachbarte Statorringbereiche und/oder Rotorringbereiche durch eine Mischzonen-Umfangsnut getrennt sind, und/oder
- bevorzugt in solchen benachbarten Statorringbereichen und/oder Rotorringbereichen in einem in Richtung von der Scheibenachse zum Rand von Statorscheibe (3) und Rotorscheibe (4) hin radial weiter außen liegenden Statorringbereich bzw Rotorringbereich die Statornute bzw. Rotornute enger sind als in dem dazu radial weiter innen benachbart liegenden Statorringbereich und/oder Rotorringbereich,
und/oder
- dass die Statornute und/oder Rotornute in Richtung von der Scheibenachse zum Rand von Statorscheibe (3) bzw. Rotorscheibe (4) hin enger werden, d.h. anders ausgedrückt, dass die Verzahnungen radial von der Scheibenachse zum Rand von Statorscheibe (3) und Rotorscheibe (3) hin enger werden.

2. Scheibenmahlvorrichtung (2) nach Anspruch 1, wobei sich die Rotorscheibe (4) im Betrieb mit einer Geschwindigkeit von ca. 1000 bis ungefähr 4000 U/min, vorzugsweise zumindest annähernd 3000 U/min, insbesondere einstellbar oder regelbar, dreht.

3. Scheibenmahlvorrichtung (2) nach Anspruch 1 oder 2, wobei die Statorscheibe (3) an einem Mühlenoberteil verschraubt und vorteilhafterweise axial längs der Scheibenachse verstellbar ist, wodurch bzw. worüber vorzugsweise auch die Größe eines Mahlspaltes in Axialrichtung zwischen Statorscheibe (3) und Rotorscheibe (4) einstellbar oder regelbar ist.

4. Scheibenmahlvorrichtung (2) nach einem der vorhergehenden Ansprüche, wobei ein Mahlspalt zwischen Statorscheibe (3) und Rotorscheibe (4) insbesondere an der engsten Stelle von etwa 0,3 bis ca. 3 mm beträgt und insbesondere einstellbar oder regelbar ist.

5. Scheibenmahlvorrichtung (2) nach einem der vorhergehenden Ansprüche, wobei die Statorzahnoberfläche und die Rotorzahnoberfläche so angeordnet und/oder geformt sind, dass der Mahlspalt in einem Randbereich von Statorscheibe (3) und Rotorscheibe (4) weiter wird.

6. Scheibenmahlvorrichtung (2) nach Anspruch 5, wobei dass der Mahlspalt in einem Randbereich von Statorscheibe (3) und Rotorscheibe (4) weiter wird.

7. Scheibenmahlvorrichtung (2) nach einem der vorhergehenden Ansprüche, wobei die Verzahnung über die gesamte Mahlzone in verschiedene Zahnkreise, d.h. Statorringbereiche und/oder Rotorringbereiche eingeteilt ist.

8. Scheibenmahlvorrichtung (2) nach Anspruch 7, wobei eine grobe Verzahnung im an den Innendurchmesser anschließenden Bereich, d.h. am innersten Statorringbereich und/oder Rotorringbereich eine Vormahlzohne bildet.

9. Scheibenmahlvorrichtung (2) nach Anspruch 7 oder 8, wobei die Verzahnung mit jedem Zahnkreis, d.h. jedem Statorringbereich und/oder Rotorringbereich von innen nach außen feiner wird.

10. Scheibenmahlvorrichtung (2) nach einem der vorhergehenden Ansprüche, wobei die Nuttiefe der Statornute und/oder Rotornute zwischen den Zähnen, d.h. entsprechend den Statorzähnen bzw. Rotorzähnen konisch verläuft.

11. Scheibenmahlvorrichtung (2) nach Anspruch 10, wobei die Statornute und/oder Rotornute zum Außendurchmesser von Statorscheibe und Rotorscheibe hin enger werden.

12. Scheibenmahlvorrichtung (2) nach einem der vorhergehenden Ansprüche, wobei die Nutbreite zumindest annähernd 1,5 bis 3,5 mal, insbesondere wenigstens ungefähr 2,5 mal größer als die Nuttiefe von Statorzahnoberfläche und/oder Rotorzahnoberfläche ist.

13. Scheibenmahlvorrichtung (2) nach einem der vorhergehenden Ansprüche, wobei jeder Zahnkreis, d.h. Statorringbereich und/oder Rotorringbereich mit einer Ringnut, die eine Mischzonen-Umfangsnut darstellt, unterteilt wird.

14. Mühle (1) mit einer Scheibenmahlvorrichtung (2) nach einem der Ansprüche 1 bis 13.
